# EUROPÄISCHE PATENTANMELDUNG

(11) **EP 1 134 022 A1**
(43) Veröffentlichungstag der Anmeldung: **19.09.2001**
(21) Anmeldenummer: 00105531.8
(22) Anmeldetag: 15.03.2000
(51) Int. Cl.: B01J 20/18

(54) **Adsorbens**

(71) Anmelder: Degussa AG, 40474 Düsseldorf (DE)
(72) Erfinder: Sextl, Elfriede, Dr., 63826 Geiselbach (DE); Krediet, Annelot, 63877 Sailauf (DE); Kilgenstein, Christian, 63831 Wiesen (DE); Full, Roland, Dr., 63768 Hösbach (DE)

(57) **Zusammenfassung**

Adsorbens, bestehend aus einem hydrophoben Zeolithen und mindestens einem Bindemittel, welches Spuren von flüchtigen und gasförmigen organischen Stoffen aus Gasgemischen so stark adsorbiert, dass eine Konzentration des flüchtigen organischen Stoffs im Gasgemisch von kleiner 500 ppm erreicht wird.

## Beschreibung

Die Erfindung betrifft ein Adsorbens. Eine alte Bauernregel besagt, dass man im Kellerregal nicht Kartoffeln neben Äpfeln lagern soll. In dieser Erkenntnis steckt viel Erfahrung. Gleichwohl bleiben den Bauern die biochemischen Hintergründe dieser Aussage in der Regel verborgen. Wenn die Fäulnisepidemie im Früchteregal grassiert, dann hat das vor allem mit einem gasförmigen Botenstoff zu tun, der wie ein Virus die Nachbarschaft ansteckt: Ethen.

In der Literatur wird es auch als "Reifegas" oder "Äpfelgas" bezeichnet. Seine Wirkung auf Pflanzen ist kompliziert, obwohl es - aus chemischer Sicht - das einfachste Phytohormon ist, das man kennt. Da es die Fruchtreife maßgeblich beeinflusst, zielen moderne Lager-und Transportverfahren auf einen Ethenausschluss ab. Der Aufwand ist beträchtlich. Nicht nur, dass die Lageratmosphäre unter beträchtlichen energetischen Aufwand auf Temperaturen von 3-4 °C gesenkt, der Sauerstoffgehalt reduziert und der CO₂-Gehalt angehoben wird; Ethen wird durch katalytische Verbrennung bei 250 °C eliminiert [5,6]. Wirksame Ethen-Adsorbentien sind bislang nicht bekannt. Wenn man sich klarmacht, welche Bedeutung die Obstlagerung und der Transport von Früchten weltweit besitzt, wie viele Container und Schiffe für solche Zwecke mit großem Aufwand ausgerüstet werden müssen [5,6], dann beginnt man zu erahnen, welchen Stellenwert einem einfachen Ethen-Filter zukommen könnte.

Die Entdeckungsgeschichte des Phytohormons Ethen führt uns an den Anfang des 20. Jahrhunderts zurück (Neljubow/1901) [7]. Obwohl es ein einfach gebauter Kohlenwasserstoff ist, stellt sich seine Wirkung auf Pflanzen sehr komplex dar. Es wird von allen höheren Pflanzen in unterschiedlichen Syntheseraten produziert und hemmt oder fördert, je nach Entwicklungsstand des Gewebes, bestimmte Entwicklungsprozesse; manchmal kann es - je nach Konzentration - auch beides. Ethen ist an der Steuerung von Wachstums- und Entwicklungsprozessen höherer Pflanzen während der gesamten Morphogenese - angefangen von der Samenkeimung über die Fruchtreifung bis zur Seneszenz-beteiligt und beeinflusst auch deren Reaktion auf Umweltreize [7,8]. Auch bei der Reifung von Früchten spielt Ethen eine wesentliche Rolle [3]. Untersuchungen belegen, dass es nicht nur als Beiprodukt der Reifung auftritt, sondern als dirigierende Leitsubstanz, vor allem bei klimakterischen Früchten. Letztere (zum Beispiel Apfel, Birne, Tomate, Banane) unterscheiden sich von nicht-klimakterischen Früchten (zum Beispiel Erdbeere, Kirsche Zitrus) durch einen steilen Anstieg der Ethensynthese bei einem gleichzeitigen, klimakterischen Atmungsanstieg während einer bestimmten Reifephase. Unreife klimakterische Früchte reagieren auf eine Ethengabe mit einer Vorverlegung des Atmungsanstiegs und einer früher einsetzenden Fruchtreife [2]. Heute weiß man, dass Ethenanstieg und Fruchtreife durch geringe Mengen (0,1 ppm) Ethen in der präklimakterischen Frucht ausgelöst werden. Ethen kann die eigene Synthese in einem autokatalytischen Prozess selbst induzieren, wenn sich die Frucht in einem sensitiven Zustand befindet. Nach Mc Munhire steuern zwei Systeme die Ethensynthese in der reifen Frucht. System I kontrolliert den Ethengrundgehalt, worauf ab einem gewissen Entwicklungsgrad das Fruchtgewebe durch die Bildung reifungsspezifischer Hydrolasen reagiert, die den Abbau von Zellwänden einleiten. Die dabei freigesetzten Oligosaccharide lösen in System II eine autokatalytische Ethensynthese aus. Die Reifung des Fruchtgewebes wird dadurch synchronisiert, dass der positive Rückkopplungsmechanismus des zweiten Systems zu einem Ethenanstieg in der Zelle und an den Nachbarzellen führt [7]. Das Ethen löst dort durch Bindung an spezifische Rezeptoren die gleiche Reaktion aus. Dabei erhöht es die Permeablität von Membranen und beschleunigt auf diese Weise den Stoffwechsel und damit die Fruchtreifung. Das Problem der Biosynthese des Ethens gilt heute als gelöst. Eine kurze Darstellung mag hier genügen:
L-Methionin → S-Adenosylmethionin (SAM) →
1-Aminocyclopropan-1-carbonsäure (ACC) → Ethen

Die eigentliche Ethensynthese beginnt mit der Umsetzung von SAM zu ACC, die von Enzym ACC-Synthase katalysiert wird [2].

Ethen kann seine Wirkung nicht nur an einem, vom Entstehungsort weit entfernten, Teil der Pflanze entfalten, sondern auch in einem benachbarten Exemplar [7]. Es ist daher sowohl Hormon als auch Pheromon. Die Pheromonwirkung ist dabei aber nicht auf Früchte der gleichen Art beschränkt, sondern besteht auch zwischen Exemplaren verschiedener Arten.

Im Zuge ihrer Reifung wird die Frucht weicher und süßer. Sie verändert ihre Farbe, Textur und ihr Aroma [7]. In einfacher Näherung wollen wir den Prozess der Fäulnis als eine Entwicklung der Frucht über den Zustand der Reife und "Überreife" hinaus betrachten. Die Frucht wird dabei durch die reifespezifischen Abbauprozesse so weit geschwächt, dass Pilze und Bakterien eindringen können, die die Pflanzenteile in organische Verbindungen zurückführen. Manchmal unterscheidet man auch Fäulnis und Verwesung. Die Fäulnis - hauptsächlich auf Bakterientätigkeit beruhendgeht bei relativer Trockenheit und saurem Milieu zugunsten der Pilzaktivität zurück, die nicht auf hohe Luftfeuchtigkeit und leicht saures Milieu angewiesen ist [14] .

Viele Früchte produzieren während einer bestimmten Reifephase besonders viel Ethen (Klimakterium), was benachbarte unreife Früchte zur schnellen Reifung veranlasst. In der Praxis blockiert man daher die Ethenbildung durch niedrige Temperaturen oder durch Entfernung gebildeten Ethens aus der Lageratmosphäre, um die Früchte (etwa während des Transports) unreif zu ·halten und erst kurz vor dem Verkauf durch Ethenbegasung die Reife zu stimulieren [5]. Aus dem selben Grund ist es auch unzweckmäßig, spätreifende Äpfel im gleichen Raum mit frühreifenden zu lagern, da die spätreifenden Äpfel zur verfrühten Vollreife kommen.

Die Fruchtreifung kann auch durch einen Ethensynthese-Hemmstoff oder durch Lagerung bei reduziertem Atmosphärendruck verzögert werden [2]. Im Wesentlichen unterscheidet man zwei Arten der Lagerung; die Kühllagerung und die Lagerung in kontrollierter Atmosphäre (CA). Übliche Bedingungen für die Kühllagerung und die Lagerung in kontrollierter Atmosphäre sind Temperaturen von -1 bis 12 °C bei einer relativen Luftfeuchte von 80-90 % und guter Belüftung durch Luftumwälzung, die auch mit einer Luftwäsche zur Entfernung von Ethen verbunden sein kann. Auf diese Weise kann die Lagerfähigkeit von Äpfel auf 4-8 Monate, die von Birnen auf 2-6 Monate ausgedehnt werden. Der Begriff "kontrollierte Atmosphäre" steht für Temperaturen von 0 bis 5 °C, O₂-Konzentrationen von ca. 3 % und CO₂-Konzentrationen von 0-5 %. Es ist wichtig, die für die jeweilige Obstart optimalen Bedingungen einzuhalten. All diese Maßnahmen sind erforderlich, weil Obst und Früchte nach der Ernte Sauerstoff veratmen und Kohlendioxid, Wärme und Reifegase abgeben, deren Schwellenwerte genau einzuhalten sind. Die Lagerzeiten sind von daher sehr eng an die Reifeprozesse gekoppelt. Momentan werden diese Lagertechniken hauptsächlich beim Transport von tropischen Früchten in Kühlschiffen, beziehungsweise Kühlcontainern oder bei der Einlagerung einheimischen Obstes erfolgreich eingesetzt [5,6].

Leider kann die Aromabildung bei Früchten durch niedrigen O₂ und hohen CO₂ Gehalt in der Lageratmosphäre stark eingeschränkt sein und dadurch wichtige Geschmackskomponenten (zum Beispiel beim Apfel) negativ beeinflusst werden [1].
Wenn also Ethen ursächlich mit der Fruchtreife verknüpft ist, dann müssen moderne Lagerverfahren auf einen Ausschluß von Ethen aus der Lageratmosphäre und auf eine Unterdrückung der Ethenwirkung abzielen, um die Fruchtreife zu verzögern und die Haltbarkeit der Früchte zu verlängern. Hier zeichnet sich ein neues Einsatzgebiet für silberimprägnierte Y-Zeolithe ab.

Gegenstand der Erfindung ist ein Adsorbens, bestehend aus einem hydrophoben Zeolithen und mindestens einem Bindemittel, welches dadurch gekennzeichnet ist, dass es Spuren von flüchtigen und gasförmigen organischen Stoffen aus Gasgemischen so stark adsorbiert, dass eine Konzentration des flüchtigen organischen Stoffs im Gasgemisch von kleiner 500 ppm erreicht wird.

Adsorbens nach Anspruch 1 dadurch gekennzeichnet, dass der Hydrophobiefaktor größer 1 ist. Das Adsorbens kann einen Hydrophobie-Faktor von größer als 1 aufweisen. Das Adsorbens kann ein Siliziumreicher Zeolith sein. Als siliziumreicher Zeolith können dealuminierte Y-Zeolithe und/oder ZSM-5-Zeolithe und/oder Mordenite eingesetzt werden.
Als Adsorbens können metalldotierte Zeolithe eingesetzt werden, wobei die Metalldotierung aus einem oder mehreren Edelmetallen bestehen kann. Das Edelmetall kann dabei in ionogoner und/oder elementarer Form vorliegen. Insbesondere kann als Edelmetall Silber eingesetzt werden.

Mit dem erfindungsgemässen Verfahren ist es möglich den Gehalt an flüchtigen organischen Stoffen von kleiner/gleich 5000 ppm beziehungsweise 10000 ppm auf Werte unter 500 ppm, vorzugsweise unter 100 ppm, zu reduzieren. Bei einer Ausgangskonzentration von kleiner/gleich 1000 ppm kann eine Reduktion der Konzentration auf unter 10 ppm erreicht werden.

Die flüchtigen organischen Stoffe können Siedepunkte unter 200 °C, unter 100 °C, unter 50 °C und unter 0 °C aufweisen.

Bevorzugt kann das erfindungsgemässe Verfahren zur Adsorption von Ethen verwendet werden.

In einer weiteren bevorzugten Ausführungsform der Erfindung kann die Adsorption von flüchtigen organischen Verbindungen aus dem Gasgemisch Luft, die gegebenenfalls mit Stickstoff und/oder Kohlendioxid angereichert ist, erfolgen.

Für unsere Untersuchungen kamen nur hydrophobe Zeolithe in Frage. Wir verwenden die Typen Wessalith DAY® und DAZ®, die beide von Degussa-Hüls hergestellt werden.
Die Zeolithe werden aufgrund ihrer Kristallstruktur als Alumosilikate charakterisiert. Sie sind sehr porös, haben aber gegenüber Aktivkohle den Vorteil eines definierten Porendurchmessers. In speziellen Herstellungsverfahren wird das Verhältnis von Silizium zu Aluminium, das Modul, im Y-Zeolithen (DAY = Dealuminierter Y-Zeolith) zugunsten des Siliziums verändert. Beim DAY beträgt es 200:1. Durch die Dealuminierung verlieren die Zeolithe ihre ionischen Anteile und erhalten dadurch einen hydrophoben Charakter. Zusammen mit der Porengröße von 0,8 nm, die auch die Aufnahme großer Moleküle ermöglicht, wird der DAY-Zeolith damit zum idealen Adsorbens für Kohlenwasserstoffe aller Art. Hier zeichnen sich vielfältige Einsatzgebiete, von Abluftreinigung bis zur Beseitigung von Geruchsbelästigungen ab.

Beim DAZ handelt es sich um einen dealuminierten Zeolithen des Typs ZSM5. Er verfügt über zwei unterschiedliche Hohlraumsysteme, deren Durchmesser im Bereich von 7 Å liegen. Die herausragenden Adsorptionseigenschaften haben auch mit einer großen inneren Oberfläche von 800 m²/g und dem Mikroporenvolumen von 0,3 cm³/g zu tun [3].

Für unsere Untersuchungen verwendeten wir verschiedene Extrudate, die in Tabelle 1 aufgeführt sind. Sie werden mit einem Bindemittelanteil von ca. 10 % hergestellt.

**Tabelle 1:**

| Liste der eingesetzten Zeolithe | | |
|---|---|---|
| Zeolith | Handelsname | Beschreibung |
| DAY DAY | F20 | DAY-Zeolith, Presszylinder Ø 2 mm |
| | F40 F40 | DAY-Zeolith, Presszylinder Ø 4 mm (nur Feststoffdotiert 1 Gew.-%) |
| | 56/92 | DAY-Zeolith, Presszylinder Ø mm x 9 mm |
| | HK | DAY-Zeolith, Hohlkörper Ø 8 mm x 12 mm |
| DAZ | F20 | DAZ-Zeolith, Presszylinder Ø 2 mm |
| | F40 | DAZ-Zeolith, Presszylinder Ø 4 mm |
| | HK | DAZ-Zeolith, Hohlkörper Ø 8 mm x 12 mm |

Warum Silber die Adsorptionsleistungen verbessert ist bislang nicht geklärt. Das Edelmetalle ungesättigte Kohlenwasserstoffe "binden" können ist bereits seit Mitte des 19. Jahrhunderts bekannt. Der dänische Apotheker Zeise beschrieb um 1830 eine Verbindung der Zusammensetzung PtCl₂(C₂H₄), in der ein Ethenmolekül komplex an ein Platinion gebunden ist [10]. Offenbar besitzen Edelmetalle mit ihren freien d-Orbitalen eine gewisse Affinität gegenüber kleinen organischen Molekülen mit Elektronendonatorfunktion, bedingt durch hohe Elektronendichten entlang der Doppelbindungen.

Zur Dotierung mit Silber wählten wir zwei Verfahren:
1. Dotierung mit AgNO₃-Lösung (Lösungsdotierung)
2. Dotierung durch Beimischung von kristallinem AgNO₃ während des Produktionsprozesses (Feststoffdotierung)

Zur Fixierung des Silbers im Zeolithen wird anschließend bei 850 °C calziniert. Die Emmission nitroser Gase zeigt die Zerstörung des Nitrations an. In welcher Form das Silber nach der Calzinierung im Zeolithen vorliegt - ob elementar (dazu wäre eine Reduktion notwendig) oder als Ag⁺ in der Oxidationsstufe +1 - konnte uns selbst von Zeolithexperten nicht endgültig beantwortet werden.

Erfindungsgemäß wurden handelsüblichen DAY-Zeolith mit einer Feststoffdotierung von 1 Gew.-% Silber eingesetzt. Zur Lösungsdotierung lässt man das Zeolithmaterial in einer Silbernitratlösung bestimmter Konzentration über Nacht stehen, trocknet dann zwei Stunden lang bei 80 °C im Trockenschrank und calziniert anschließend. Wir dotierten alle Zeolith-Formkörper mit 1-, 3-, und Sprozentiger Silbernitratlösung. Die Hohlkörper wurden mit 3prozentiger Lösung dotiert.

Zunächst war es für uns von Bedeutung, die vorliegenden Zeolithe entsprechend ihrer Eignung für die Ethenadsorption zu sortieren. Ein Kriterium ist die Adsorptionskapazität, die die maximale Beladung beschreibt. Ausgehend von einfachsten schulischen Mitteln stießen wir auf ein Verfahren, das man im weitesten Sinne mit "volumetrischer Gasanalyse" umschreiben könnte.
Wir wollen nicht verschweigen, dass dieser verblüffend einfachen, aber äußerst praktikablen Idee, komplizierte und zum Teil auch frustrierende Versuche mit Kolbenprobern und Manometern vorausgingen. Als kalibriertes Gassammelrohr diente eine umgedrehte 50 ml-Bürette, die bis zum Hahn mit Wasser gefüllt wird. Stellt man sie mit dem Fuß in ein Becherglas mit Wasser und schließt an der Auslaufspitze über ein Stück Vakuumschlauch eine 50 ml-Einwegspritze an, in der sich das Adsorbens befindet, dann lässt sich .die Bürette nach dem pneumatischen Prinzip sehr leicht mit definierten Mengen an Reingas, beziehungsweise Gasgemisch betanken.
Mit dem Öffnen des Hahns wird der Kontakt zwischen Gas und Adsorbens hergestellt. Die in der Bürette aufsteigende Wassersäule zeigt die Menge des adsorbierten Gases an. Natürlich werden mehrere Proben parallel angesetzt und Blindproben als Kontrollversuch mit aufgebaut. Da der Hahn und die Öffnung in der Bürettenspitze nur einen kleinen Durchmesser besitzen, dauert es zwei Tage, bis sich ein konstanter Endwert einstellt, der die unter den jeweiligen Bedingungen maximale Ethenadsorption anzeigt.

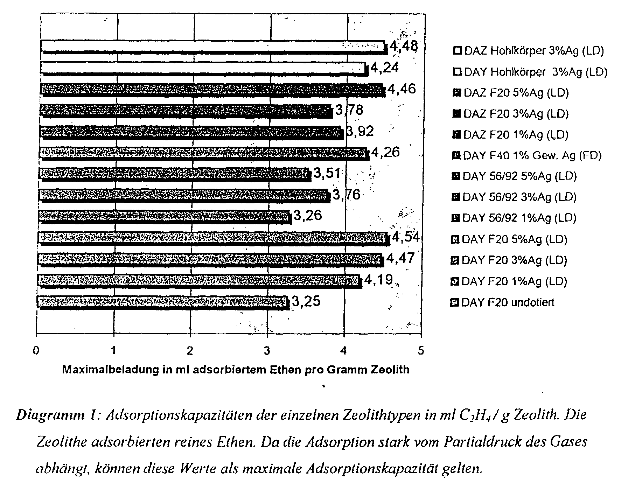

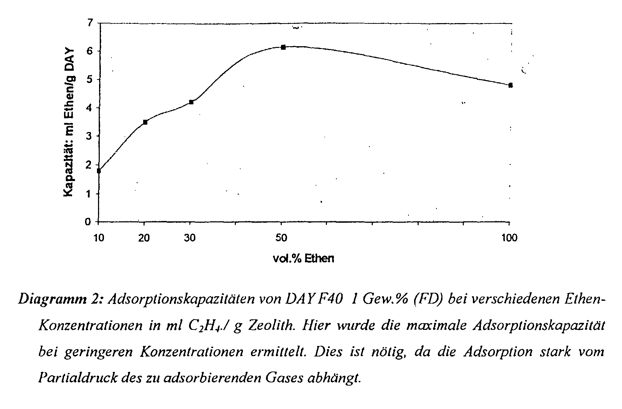

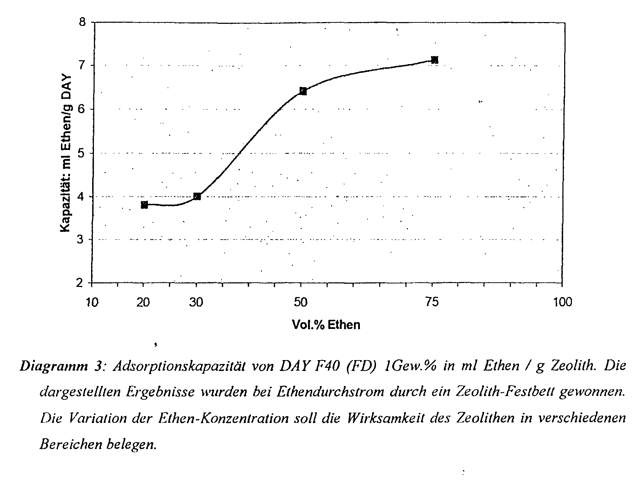

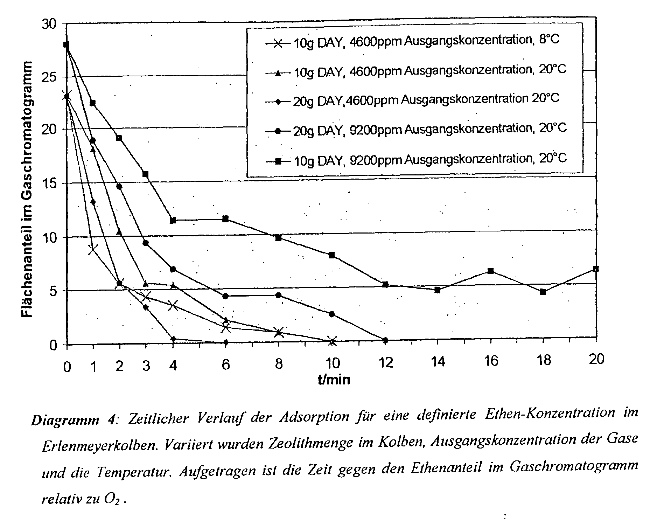

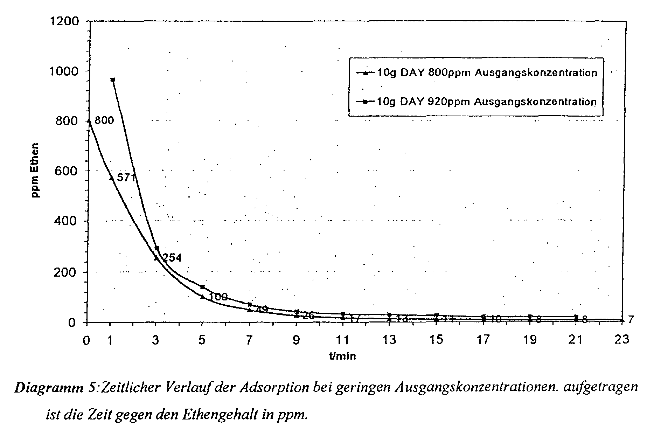

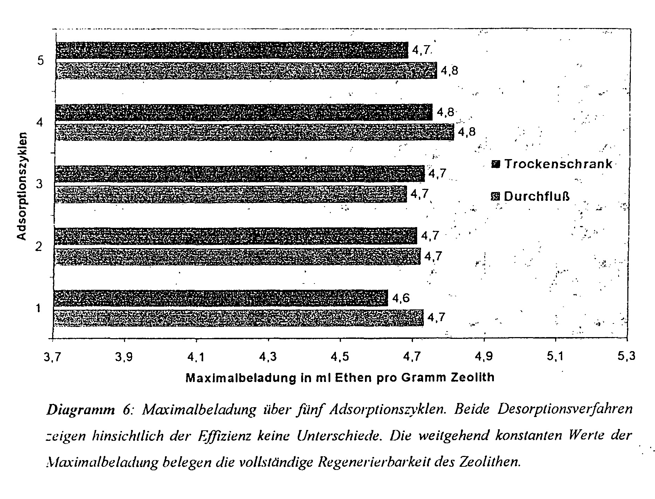

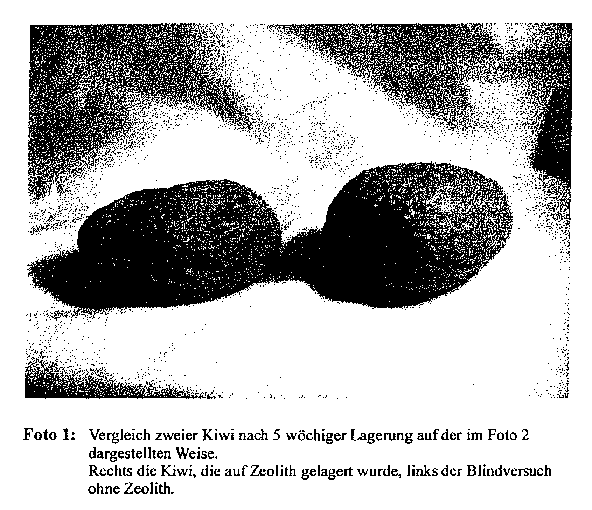

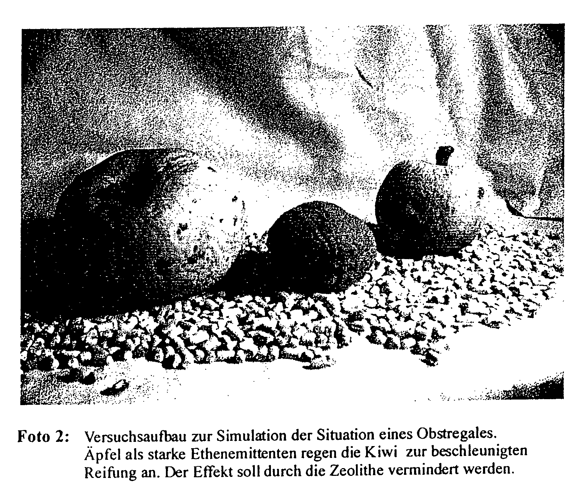

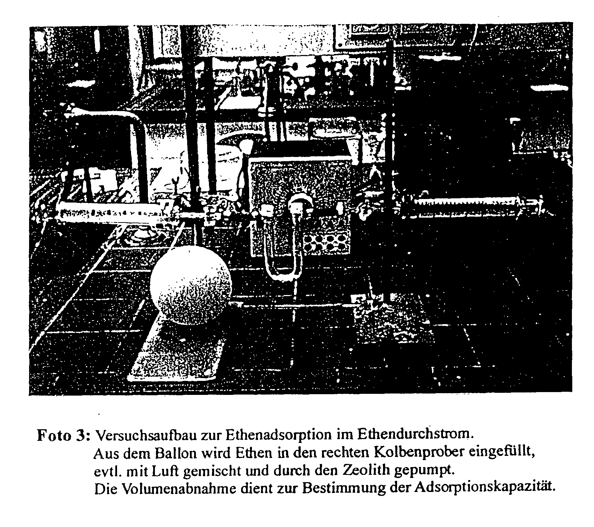

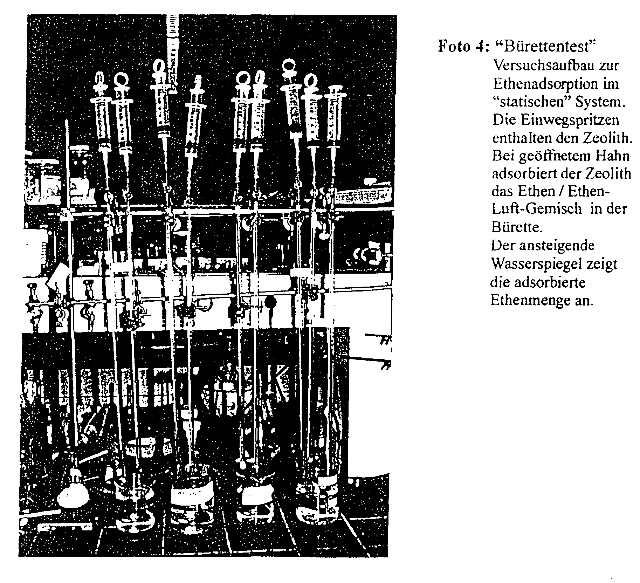

Die in Diagram 1 dargestellten Befunde zeigen, dass eine Silberdotierung die Adsorptionskapazität gegenüber dem undotierten Material tatsächlich signifikant erhöht. Im direkten Vergleich DAY F20 zu DAY F20 mit 1 %iger Lösungsdotierung schnitt die Adsorption beim Silber-DAY um ca. 25 % besser ab. Keine Unterschiede ergaben sich zwischen DAY F40 mit Lösungsdotierung und Feststoffdotierung (1 %).
Beim DAY F20 nimmt zwar die Adsorptionskapazität mit steigender Dotierungsmenge zu. Der Anstieg ist allerdings, vor allem zwischen 3- und 5-prozentig dotiertem Zeolith nicht markant. Die gleiche Aussage gilt auch für DAZ F20. Beim DAY 56/92 lässt sich sogar eine Verschlechterung bei zu hoher Dotierungsmenge erkennen.

Anscheinend hat auch die Größe und die Oberfläche der Formkörper Einfluss auf die Adsorptionseigenschaften: DAY 56/92, mit großen zylindrischen Formkörpern, schneidet deutlich schlechter ab als die kleinzylindrischen F20-Formkörper.
Die Gegenüberstellung von DAY und DAZ zeigt lediglich marginale Unterschiede. Da die Lösungsdotierung für größere Chargen sehr arbeitsaufwendig ist und feststoffdotierte F40-Zylinder Spitzenwerte erzielten, verwendeten wir die bereits werksseitig dotierten Zeolithe.

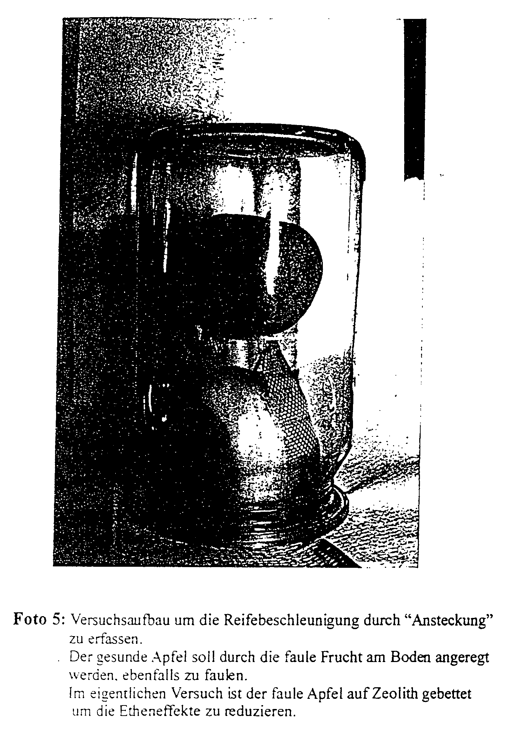

Die Adsorption als solche beruht auf vergleichsweise schwachen Kräften, die zwischen der Adsorberoberfläche und dem Adsorbat auftreten.
Die Gleichgewichtseinstellung zwischen Adsorption und Desorption ist stark von den Konzentrationen, beziehungsweise den Partialdrücken der zu adsorbierenden Gase abhängig.
Um herauszufinden, ob die Adsorptionsleistung des Silber-DAY auch für geringe Ethen-Konzentrationen gilt, griffen wir wieder auf den "Büretten-Test" zurück. Wir senkten den Ethengehalt im Gemisch mit Luft und füllten damit die Büretten. Da relativ zum Zeolith der Ethenvorrat in den Büretten nun abgesenkt war, mussten wir auch die Zeolithmenge reduzieren. Diagramm 2 enthält eine Aufstellung der so ermittelten Werte.

Wie sich zeigt, ist der Zeolith auch bei einer Konzentration von 10 Vol.-% Ethen noch in der Lage, pro Gramm 1,8 ml aufzunehmen. Ins Auge sticht das scheinbare Maximum bei 50 Vol.-% Ethen.

Bei den oben beschriebenen Untersuchungen sorgt durch die räumliche Trennung von Gas und Adsorbens lediglich der Diffusionsstrom für einen Kontakt zwischen beiden Partnern. Das Geschehen gestaltet sich aus diesem Grunde weitgehend statisch. Um auch einen Einblick in die Adsorptionsvorgänge bei dynamischer Versuchsführung zu gewinnen, planten wir eine weitere Versuchsreihe, bei der Ethen über ein Zeolith-Festbett gepumpt wird. Für diese Untersuchungen verendeten wir ein U-Rohr mit Festbett-Füllung, an das wir seitlich zwei Kolbenprober anschlossen.
Wenn man ein definiertes Volumen Ethen oder ein definiertes Ethen-Luft Gemisch auf einen Kolbenprober aufzieht, kann man durch einfaches Hin- und Herpumpen des Gases die Volumenabnahme nach passieren des Zeolithfilters, direkt an der Skala des Kolbenprobers ablesen.
Da bei dynamischer Prozessführung neben der Wärmebewegung der Teilchen und dem Konzentrationsgradienten des Gleichgewichts auch die Bewegungsenergie der durchströmenden Luft der Ethen-Adhäsion entgegenwirkt, erschien es uns sinnvoll die Adsorptionskapazitäten für verschiedene Ethenkonzentrationen unter dynamischen Bedingungen zu bestimmen und mit den Ergebnissen im "statischen" Bürettenversuch zu vergleichen.
Auffällig ist die hohe Adsorptionskapazität bei 75 Vol.-% Ausgangskonzentration des Ethens. Ob der gleiche Effekt auch im statischen System (siehe Diagramm 2) auftritt, ist noch zu prüfen. Die Unterschiede zwischen beiden Systemen sind im weiteren Kurvenverlauf marginal. Folglich sollte bei der praktischen Anwendung im Durchstrom keine nachteilige Beeinflussung der Adsorptionskapazität auftreten.

Um einen Einblick in die Zeitabhängigkeit der Adsorption zu erhalten, wählten wir folgende Versuchsanordnung: ein geschlossener Erlenmeyerkolben bekannten Volumens mit Seitenstutzen wird mit Zeolith befüllt. Die Etheninjektion erfolgt, genau wie die Entnahme der Proben, durch einen am Seitenstutzen angeschlossenen, abgeklemmten Gummischlauch. Wird in bestimmten Intervallen nach der Etheninjektion eine Probe entnommen, so ergibt sich aus der gaschromatographischen Auswertung ein Bild vom zeitlichen Adsorptionsverlauf. Bei eigenen Laboruntersuchungen variierten wir sowohl die Zeolithmenge im Kolben, die Temperatur, als auch die Ausgangskonzentration des Ethens.

Bei Verwendung einer größeren Menge an Silber DAY liegt die Adsorptionsgeschwindigkeit nur wenig höher. Die Größere Zeolithmenge senkt jedoch die Endkonzentration des Ethens deutlich. In niedrigen Temperaturbereichen, wie sie in Kühlcontainern üblich sind, tritt keine Verschlechterung des Adsorptionsverhaltens auf. Bei Erhöhung der Ausgangskonzentration liegt die Konzentration am Versuchsende ebenfalls höher. Die Gleichgewichtseinstellung scheint aber etwa gleichzeitig zu erfolgen.
Folglich lässt sich die Adsorptionsgeschwindigkeit kaum, wohl aber die Gleichgewichtskonzentration beeinflussen. Bei den bisher beschriebenen Untersuchungen bewegten wir uns-bezogen auf die Ethendosierung - im 1 ml - 10 ml Maßstab, d. h. im Konzentrationsbereich 1000 ppm - 10000 ppm. Aus der Fachliteratur geht hervor, dass die Sensibilität von Früchten aber im Bereich weniger ppm, teilweise sogar unter 1 ppm liegt.
Bevor die Messung beginnen konnte, war zu prüfen, ob nicht bereits "Wandeffekte" an der Innenseite des. Kolbens zur Konzentrationsabnahme führten. Dies war nicht der Fall.

Das Gefäß wurde mit 10 g Silber-DAY beschickt, verschlossen und dann wurden 1000 µl Ethen injiziert (ca. 920 ppm). Im zwei-Minuten-Abstand wurden Proben entnommen, die im Gaschromatogramm quantitativ ausgewertet wurden.

Das Ergebnis ist erstaunlich (siehe Diagramm 5). Auch bei so hohen Verdünnungsgraden und einem "statischen" Adsorber-Bett, das eine Gasaufnahme nur über Diffusionsprozesse zulässt, fällt die Ethenkonzentration in kürzester Zeit rapide ab um, sich nach 10-20 Minuten bei 25 ppm und nach 30 Minuten bei ca. 7 ppm einzustellen. Damit ist sichergestellt, dass der Adsorber in dem für die Fruchtreife relevanten Konzentrationsbereich des Ethens tauglich ist. Die Konzentrationen liegen in modernen Lagerhallen durch anderweitige Verbesserungen bei ca. 100 ppm, ein Bereich also, in dem der Zeolith einwandfrei arbeitet.

Für den Dauereinsatz des Zeolithen bei der Fruchtlagerung, aber auch aus Kostengründen ist es wichtig, seine Wirksamkeit im Dauerbetrieb zu testen und seine Regenerationsfähigkeit zu überprüfen. Zur Desorption wandten wir zwei Verfahren an:
1. Desorption durch Temperaturerhöhung
2. Desorption im Luftstrom

Die Totaldesorption erfolgte im vorgeheizten Trockenschrank durch 30minütiges Erhitzen der Zeolithprobe bei 60 °C.

Für die Desorption im Luftstrom verwendeten wir ein U-Rohr, durch das nach Anschluss einer Wasserstrahlpumpe ca. 240 1 Luft/h gesaugt werden. Die aus dem U-Rohr austretende Luft wird in bestimmten Zeitintervallen gaschromatographisch auf Ethenanteile untersucht.
Die Ergebnisse waren verblüffend. Im Luftstrom erreichten wir die Detektionsgrenze unseres Gaschromatographen bereits nach 12 min. Das heißt, die Ethenkonzentration der Luft sank in diesem Zeitraum auf unter 750 ppm.
Diese "Entladung" kann man deutlich beschleunigen, wenn man zur Desorption Umgebungsluft von 60 °C verwendet. Im Gegenzug bremst ein Absenken des Durchflusses die Desorption so stark, dass erst nach einer Stunde die Detektionsgrenze erreicht wird. Beide Verfahren gewährleisten eine vollständige Entladung des Zeolithen (siehe Diagramm 6). Hier wurden Zeolithproben über fünf Beladungszyklen im Anblick auf ihre Maximalbeladung getestet. Dabei kann keine "Ermüdung" des Adsorbers festgestellt werden. Die Effizienz beider Desorptionsmethoden scheint vergleichbar zu sein.

Natürlich war die praktische Anwendung der von uns registrierten Effekte von ganz besonderer Bedeutung. An die Stelle von Glasgeräten, Messinstrumenten und Gasflaschen sollten in diesem Stadium der Arbeit Obst und Früchte treten. Die teuren und empfindlichen Analysegeräte mussten nun einer rein visuellen Kontrolle Platz machen. Um die Situation eines Obstregals zu simulieren brachten wir auf einem Zeolithbett zwei Apfel in die unmittelbare Umgebung verschiedener Früchte. Reife Äpfel sind starke Ethen-Emittenten. Es müsste sich also bei dem Vergleichsversuch ohne Zeolith eine beschleunigte Reifung nachweisen lassen. Solche Experimente sind in der Literatur hinlänglich bekannt und auch für den experimentellen Biologieunterricht erschlossen. Bei Bananen und Kartoffeln ließen sich keine Effekte beobachten. Allerdings zeigten Kiwis, die sehr empfindlich auf Ethen reagieren, nach drei Wochen Ethenexposition erste Differenzen. Die Früchte im Kontrollversuch waren deutlich weicher und zeigten Runzeln. Der gleiche Effekt setzte bei der Kombination Kiwi/Zeolith ebenfalls ein, allerdings mit einer Woche Verzögerung. Die Kontrollkiwi behielt einen Reifungsvorsprung. Offenbar zeigte der Zeolith eine, wenn auch geringe, Leistung.

Weiterhin interessierte uns, ob die Wirkung von endogen erzeugten Ethen sich rückwirkend verstärkt, wenn es sich in einem abgeschlossenen System um die Frucht anreichert. Zu diesem Zweck schlossen wir Früchte luftdicht in Einweckgläser ein und beobachteten, ob sich im Reifungsverhalten Unterschiede zeigen, wenn das Glas zusätzlich mit Silber-DAY beschickt wurde.
Im beobachteten Zeitraum von 6 Wochen traten allerdings keine Veränderungen auf. Wir vermuten, dass die Frucht in einem kurzen Zeitraum den Sauerstoff des Gefäßes umgesetzt hatte und infolge von Sauerstoffmangel keine Energie gewinnen konnte, die für die Reifung notwendig ist. Ein Gaschromatogramm, das am Versuchsende angefertigt wurde deckt sich mit unserem Verdacht, da sehr viel CO₂, aber fast keinen Sauerstoff nachwies.
Aufgrund dieser Erfahrung beschlossen wir, im weitgehend geschlossenen System zu arbeiten. Umgedrehte 1,5 1 Einweckgläser wurden so präpariert, dass auf einem Zeolithbett am Boden ein fauler Apfel lag. Darüber befand sich, auf einem Drahtnetz liegend, ein gesunder Apfel. Durch einen schmalen Spalt zwischen Glas und Unterlage kann immer noch Luft eindringen. Für die Atmung müsste also genug Sauerstoff zur Verfügung stehen.
Die Ansteckung sollte ausgehend vom faulen Apfel am.Boden den Gesunden auf dem Drahtgitter erfassen.

Verglichen mit den herkömmlichen Verfahren, die in der Obstfrischhaltung eingesetzt werden um Ethen aus der Atmosphäre zu entfernen, sehen wir den silberdotierten DAY Zeolithen als attraktive Alternative.
Die Adsorptionskapazität liegt erstaunlich hoch, wahrscheinlich höher als die der Aktivkohle. Der Vergleich steht allerdings noch aus. Mögliche Zeolithfilter könnten dadurch besonders lange eingesetzt werden. Die anschließende Desorption gestaltet sich einfach und nicht teuer. Bisher wissen wir, dass die niedrige Temperatur im Kühlhaus keine negative Beeinflussung darstellt. Generell ist die Adsorptionskapazität stark temperaturabhängig. Deshalb werden wir auch auf diesem Gebiet noch nachforschen. Da schon geringe Ethenspuren in CA-Lagern ihre Auswirkungen zeigen, ist es von Bedeutung, dass DAY den Ethengehalt auf wenige ppm senken kann.

Literaturverzeichnis
[1] Brackmann A., Streif J. und Bangerth F.: Einfluss von CA- beziehungsweise ULO-Lagerbedingungen auf Fruchtqualität und Reife bei präklimakterisch und klimakterisch geernteten Äpfeln, in: Gartenbauwissenschaft 1/95
[2] Bufler, G.: Die Regulation der Ethylensythese von Äpfeln während der Fruchtreife und Lagerung, in: Erwerbsobstbau 6/86, S. 164-166
[3] Choi, S.-J.; Bufler G.; Bangerth F.: Ethylensensitivität von Apfel- und Tomatenfrüchten während ihrer Entwicklung, in: Gartenbauwissenschaft 4/94, S. 154/158
[4] Degussa AG: Wessalith® DAY, A hydrophobic adsorbent for gas purification; Technical Information Nr. 4307.1 Juni 1991
[5] Hochhaus K.-H.; Wild, Y.: Kühlcontainer mit kontrollierter Atmosphäre; in: Schiff & Hafen / Seewirtschaft, 4/92, S. 41-46
[6] Hochhaus K.-H.: Energetische Optimierung von Ladungskühlanlagen mit kontrollierter Atmosphäre; in: Jahrbuch der Schiffbautechnischen Gesellschaft 1987, S. 375-384
[7] Koch, Sabine: Steuerung pflanzlicher Alterungsprozesse durch Ethen, in : Sekundarstufe II, Sept. 1997
[8] Lürssen, Klaus: Das Pflanzenhormon Ethylen; in: Chemie in unserer Zeit, 4/81 S. 122-128
[9] Puppe, Lothar: Zeolithe - Eigenschaften und technische Anwendungen, in Chemie in unserer Zeit 4/1986 S. 117-127
[10] Römps Chemielexikon
[11] Sachs, Miriam: Die Speicherung von Ethen in DAY-Zeolithen; Facharbeit aus dem Fach Chemie, Hösbach Feb. 1997
[12] Tißler, Arno; Müller, Ulrich; Unger, Klaus K.: Synthetische Zeolithe und Alumophosphate, in: Nachrichten chemisch technisches Labor, 6/1988
[13] www.rrz.uni-hamburg.de/biologie/b online/d31/31.htm
[14] www.merian.fr.bw.schule.de/Beck/skripten/12bs12-51.htm
[15] Ziegler: Physiologie, Erscheinungsort und Jahr unbekannt, S. 368
[16] Ziegler: Physiologie, Erscheinungsort und Jahr unbekannt, S. 389-390

## Patentansprüche

1. Adsorbens, bestehend aus einem hydrophoben Zeolithen und mindestens einem Bindemittel, **dadurch gekennzeichnet, dass** es Spuren von flüchtigen und gasförmigen organischen Stoffen aus Gasgemischen so stark adsorbiert, dass eine Konzentration des flüchtigen organischen Stoffs im Gasgemisch von kleiner 500 ppm erreicht wird.

2. Adsorbens nach Anspruch 1 **dadurch gekennzeichnet, dass** der Hydrophobiefaktor größer 1 ist.

3. Adsorbens nach Anspruch 2, **dadurch gekennzeichnet, dass** als Adsorbens siliziumreiche Zeolithe eingesetzt werden.

4. Adsorbens nach Anspruch 3, **dadurch gekennzeichnet, dass** als siliziumreiche Zeolithe dealuminierte Y-Zeolithe und/oder ZSM-5-Zeolithe und/oder Mordenite eingesetzt werden.

5. Adsorbens nach Anspruch 1, **dadurch gekennzeichnet, dass** als Adsorbens metalldotierte Zeolithe eingesetzt werden.

6. Adsorbens nach Anspruch 5, **dadurch gekennzeichnet, dass** die Metalldotierung aus einem oder mehreren Edelmetallen besteht.

7. Adsorbens nach Anspruch 6, **dadurch gekennzeichnet, dass** das oder die Edelmetalle in ionogener und/oder elementarer Form vorliegen.

8. Adsorbens nach Anspruch 6, **dadurch gekennzeichnet, dass** als Edelmetall Silber verwendet wird.

9. Adsorbens nach Anspruch 1, **dadurch gekennzeichnet, dass** die Konzentration von flüchtigen organischen Stoffen in Gasgemischen von kleiner/gleich 10000 ppm auf Werte unter 500 ppm reduziert wird.

10. Adsorbens nach Anspruch 9, **dadurch gekennzeichnet, dass** die Konzentration von flüchtigen organischen Stoffen in Gasgemischen von kleiner/gleich 10000 ppm auf Werte unter 100 ppm reduziert wird.

11. Adsorbens nach Anspruch 1, **dadurch gekennzeichnet, dass** die Konzentration von flüchtigen organischen Stoffen in Gasgemischen von kleiner/gleich 5000 ppm auf Werte unter 500 ppm reduziert wird.

12. Adsorbens nach Anspruch 11, **dadurch gekennzeichnet, dass** die Konzentration von flüchtigen organischen Stoffen in Gasgemischen von kleiner/gleich 5000 ppm auf Werte unter 100 ppm reduziert wird.

13. Adsorbens nach Anspruch 1, **dadurch gekennzeichnet, dass** die Konzentration von flüchtigen organischen Stoffen in Gasgemischen von kleiner/gleich 1000 ppm auf Werte unter 100 ppm reduziert wird.

14. Adsorbens nach Anspruch 13, **dadurch gekennzeichnet, dass** die Konzentration von flüchtigen organischen Stoffen in Gasgemischen von kleiner/gleich 1000 ppm auf Werte unter 10 ppm reduziert wird.

15. Adsorbens nach Anspruch 1, **dadurch gekennzeichnet, dass** die flüchtige organische Verbindung einen Siedepunkt unter 200 °C hat.

16. Adsorbens nach Anspruch 15, **dadurch gekennzeichnet, dass** die flüchtige organische Verbindung einen Siedepunkt unter 100 °C hat.

17. Adsorbens nach Anspruch 16, **dadurch gekennzeichnet, dass** die flüchtige organische Verbindung einen Siedepunkt unter 50 °C hat.

18. Adsorbens nach Anspruch 17, **dadurch gekennzeichnet, dass** die flüchtige organische Verbindung einen Siedepunkt unter 0 °C hat.

19. Adsorbens nach Anspruch 1, **dadurch gekennzeichnet, dass** die flüchtige organische Verbindung Ethen ist.

20. Adsorbens nach Anspruch 1, **dadurch gekennzeichnet, dass** das Gasgemisch Luft ist.

21. Adsorbens nach Anspruch 1, **dadurch gekennzeichnet, dass** das Gasgemisch gegenüber Luft mit Stickstoff angereichert ist.

22. Adsorbens nach Anspruch 20, **dadurch gekennzeichnet, dass** das Gasgemisch gegenüber Luft mit Kohlendioxid angereichert ist.
